# EUROPÄISCHE PATENTSCHRIFT

(11) **EP 4 585 811 B1**
(45) Veröffentlichungstag und Bekanntmachung des Hinweises auf die Patenterteilung: **29.07.2026**
(21) Anmeldenummer: 25150590.5
(22) Anmeldetag: 08.01.2025
(51) Int. Cl.: F16B 13/12

(54) **DÜBEL**
DOWEL
CHEVILLE

(30) Priorität: 11.01.2024 DE 102024100789; 11.10.2024 DE 102024129413
(43) Veröffentlichungstag der Anmeldung: 16.07.2025
(73) Patentinhaber: fischerwerke GmbH & Co. KG, 72178 Waldachtal (DE)
(72) Erfinder: Renz, Jürgen, 72202 Nagold (DE)
(74) Vertreter: Suchy, Ulrich Johannes

(56) Entgegenhaltungen:
- DE-A1- 3 732 596

## Beschreibung

Die Erfindung betrifft einen Dübel mit den Merkmalen des Oberbegriffs des Anspruchs 1.

Aus der Offenlegungsschrift DE 37 32 596 A1 ist ein Dübel bekannt, der durch einen Längsschlitz in einer Axialebene auf einem größten Teil seiner Länge in zwei Spreizschenkel geteilt ist, die an beispielsweise drei Stellen in einer Längsrichtung des Dübels durch Laschen am Umfang miteinander verbunden sind.

Aufgabe der Erfindung ist, einen Dübel vorzuschlagen, der gute Haltewerte in unterschiedlichen Ankergründen aufweist.

Diese Aufgabe wird erfindungsgemäß durch einen Dübel mit den Merkmalen des Anspruchs 1 gelöst.

Der erfindungsgemäße Dübel weist zwei Ankerabschnitte auf, die sich in einer Längsrichtung des Dübels erstrecken und hintereinander angeordnet sind. Ein "Ankerabschnitt" ist ein Abschnitt des Dübels, der zur Verankerung des Dübels in einem Ankerloch im Ankergrund vorgesehen ist. Das Ankerloch ist insbesondere ein Bohrloch in einem Mauerwerk oder einem Betonbauteil. Ein vorderer Ankerabschnitt befindet sich in der Längsrichtung des Dübels vor einem hinteren Ankerabschnitt, wobei sich "vor" auf eine vorgesehene Einbringrichtung des Dübels in ein Ankerloch in einem Ankergrund bezieht. Der vordere Ankerabschnitt gelangt somit in das Ankerloch, bevor der hintere Ankerabschnitt in das Ankerloch gelangen kann.

Die beiden Ankerabschnitt grenzen insbesondere direkt aneinander an. Sie bilden gemeinsam einen Spreizbereich des Dübels, der einen vorderen Endabschnitt des Dübels bildet. Der hintere Ankerabschnitt weist mindestens zwei sich in Längsrichtung über den hinteren Ankerabschnitt erstreckende hintere Spreizschenkel auf, die sich insbesondere bezogen auf eine Längsachse des Spreizdübels gegenüber liegen, und die an ihren Längsenden miteinander verbunden sind. Die Länge der hinteren Spreizschenkel ist in Längsrichtung größer als ein Durchmesser des hinteren Ankerabschnitts.

Insbesondere weist auch der vordere Ankerabschnitt mindestens zwei sich in Längsrichtung über den hinteren Ankerabschnitt erstreckende vordere Spreizschenkel auf, die sich insbesondere bezogen auf die Längsachse des Spreizdübels gegenüber liegen, und die an ihren Längsenden miteinander verbunden sind. Die Länge der vorderen Spreizschenkel ist in Längsrichtung größer als ein Durchmesser des vorderen Ankerabschnitts.

Insbesondere berühren sich die hinteren Spreizschenkel und die vorderen Spreizschenkel. Insbesondere gehen die hinteren Spreizschenkel mit ihren vorderen Längsenden an den hinteren Längsenden der vorderen Spreizschenkel in diese über, wobei diese Längsenden insbesondere gemeinsam mit einem Verbinder verbunden sind.

Quer, insbesondere radial zur Längsrichtung sind die beiden Ankerabschnitte derart elastisch, dass sie bei einem Einbringen in ein zylindrisches Ankerloch, dessen Durchmesser kleiner als ein beziehungsweise die Durchmesser der Ankerabschnitte vor dem Einbringen in das Ankerloch ist, elastisch zusammengedrückt werden und mit einer elastischen Andruckkraft an einer Lochwand des Ankerlochs anliegen. Die Ankerabschnitte müssen keine kreisförmigen Querschnitte aufweisen, sondern können insbesondere auch elliptische oder ellipsenähnliche Querschnitte aufweisen, also Querschnitte mit verschieden großen Abmessungen in unterschiedlichen Richtungen. Mit "Durchmesser der Ankerabschnitte" ist deswegen ein Durchmesser eines einen der Ankerabschnitte umhüllenden Hüllkreises gemeint. Der gedachte Hüllkreis liegt beispielsweise an zwei einander gegenüberliegenden oder beispielsweise an drei oder vier Umfangsstellen von einem der beiden Ankerabschnitte an. Durch Einbringen eines stiftförmigen Spreizelements in die Ankerabschnitte lassen sich diese zudem aufspreizen, das heißt radial aufweiten, um eine Ankerkraft, das heißt einen Halt des Dübels gegen Herausziehen aus dem Ankerloch, zu erhöhen. Das Spreizelement ist beispielsweise eine Schraube oder ein Nagel. Das Spreizelement ist nicht zwingend für die Erfindung.

In einem nicht aufgespreizten Zustand und vor dem Einbringen in das Ankerloch nimmt ein Durchmesser des vorderen Ankerabschnitts und vorzugsweise auch des hinteren Ankerabschnitts von Längsenden zu einer Längsmitte der Ankerabschnitte zu. Das heißt, in einem Längsmittelbereich der Ankerabschnitte weist der vordere und vorzugsweise auch der hintere Ankerabschnitt einen größeren Durchmesser auf als an den Längsenden der Ankerabschnitte.

Erfindungsgemäß ist in einem zylindrischen Ankerloch, dessen Durchmesser kleiner als die Durchmesser der Ankerabschnitte des Dübels vor dem Einbringen in das Ankerloch ist, eine radiale Andruckkraft gegen eine Lochwand des Ankerlochs des hinteren Ankerabschnitts des Dübels größer als die des vorderen Ankerabschnitts. Typischerweise weist das Ankerloch einen Nenndurchmesser des Dübels als Durchmesser auf und die Ankerabschnitte des Dübels sind zum Einbringen in das Ankerloch auf den Nenndurchmesser zusammendrückbar. Die größere radiale Andruckkraft gegen die Lochwand des zylindrischen Ankerlochs kann durch einen gegenüber dem vorderen Ankerabschnitt größeren Durchmesser des hinteren Ankerabschnitts vor dem Einbringen in das Ankerloch und/oder durch eine größere radiale Steifigkeit des hinteren Ankerabschnitts und/oder einen kürzeren hinteren als vorderen Ankerabschnitt des erfindungsgemäßen Dübels erreicht werden. Das heißt, erfindungsgemäß ist die Federsteifigkeit in Querrichtung, also in die Richtung, in die die Lochwand auf die Ankerabschnitte wirkt, beim Zusammendrücken des vorderen Ankerabschnitts auf den Durchmesser des Ankerlochs kleiner als die des hinteren Abschnitts, wenn dieser in Querrichtung auf den Durchmesser des Ankerlochs zusammengedrückt wird. Die Durchmesser der Ankerabschnitte sind, wie beschrieben, die Durchmesser ihrer Hüllkreise, das heißt der hintere Ankerabschnitt kann beispielsweise eine größere Querabmessung in der Richtung quer zur Längsrichtung des Dübels, in der der Ankerabschnitt beim Einbringen in das zylindrische Ankerloch zusammengedrückt wird, aufweisen als der vordere Ankerabschnitt. Andere Möglichkeiten für die größere radiale Andruckkraft des hinteren Ankerabschnitts schließt die Erfindung nicht aus. Es ist also eine Steckkraft in ein Ankerloch und umgekehrt eine Auszugskraft aus dem Ankerloch des hinteren Ankerabschnitts des erfindungsgemäßen Dübels größer als die seines vorderen Ankerabschnitts. Die radiale Andruckkraft und die Steckkraft beziehen sich auf die nicht durch ein Spreizelement aufgespreizten Ankerabschnitte, wobei ein Aufspreizen mit einem Spreizelement nicht ausgeschlossen ist. Allerdings ändert ein Spreizelement die radiale Andruckkraft und die Ankerkraft und kann ihr Verhältnis von vorderem und hinterem Ankerabschnitt auch umkehren.

Ein Vorteil des erfindungsgemäßen Dübels ist, dass sich sein vorderer Ankerabschnitt mit im Vergleich zum hinteren Ankerabschnitt kleinen Steckkraft in ein enges Ankerloch in einem massiven Ankergrund wie Beton oder Vollsteinmauerwerk einbringen lässt. In diesem Fall lässt sich der Dübel bereits nur mit seinem vorderen Ankerabschnitt mit ausreichender Ankerkraft verankern. In einem weiten Ankerloch, wie es typisch für Lochbaustoffe wie Hochlochziegel oder in einem relativ weichen Ankergrund wie Porenbeton ist, in denen beim Bohren aufgrund des geringeren Widerstands, den der Ankergrund dem Bohrer entgegensetzt, beim Bohren Ankerlöcher mit relativ großem Durchmesser im Vergleich zu massiven Baustoffen entstehen, oder einem Ankergrund, in dem ein durch Bohren erstelltes Ankerloch Ausbrüche und dadurch Aufweitungen aufweist, und/oder in einem Hohlräume aufweisenden Ankergrund erreicht der erfindungsgemäße Dübel durch eine Verankerung mit seinen beiden Ankerabschnitten eine gute Ankerkraft.

Die abhängigen Ansprüche haben vorteilhafte Ausgestaltungen und Weiterbildungen der im Anspruch 1 angegebenen Erfindung zum Gegenstand.

In bevorzugter Ausführung der Erfindung weisen der vordere Ankerabschnitt mindestens zwei vordere, sich in der Längsrichtung des Dübels erstreckende und quer zur Längsrichtung des Dübels elastische Spreizschenkel und der hintere Ankerabschnitt mindestens zwei hintere, sich in der Längsrichtung des Dübels erstreckende und quer zur Längsrichtung des Dübels elastische Spreizschenkel auf, wobei die hinteren Spreizschenkel eine größere Biegesteifigkeit quer zur Längsrichtung des Dübels aufweisen als die vorderen Spreizschenkel und/oder die hinteren Spreizschenkel quer zur Längsrichtung des Dübels über die vorderen Spreizschenkel überstehen. Die hinteren Spreizschenkel sind derart gestaltet, dass sie aufgrund der größeren Biegesteifigkeit der hinteren Spreizschenkel eine größere radiale Andruckkraft nach außen aufweisen als die vorderen Spreizschenkel, wenn die vorderen und die hinteren Spreizschenkel auf ein bestimmtes, gleiches Maß radial zusammengedrückt werden. Insbesondere ist die Federsteifigkeit der hinteren Spreizschenkel entsprechend größer als die der vorderen Spreizschenkel. Mit "quer zur Längsrichtung überstehen" ist gemeint, dass der Durchmesser des Hüllkreises der hinteren Spreizschenkel größer als der Durchmesser des Hüllkreises der vorderen Spreizschenkel ist. Beides, sowohl die größere Biegesteifigkeit als auch der Überstand quer zur Längsrichtung, bewirkt die größere radiale Andruckkraft der hinteren Spreizschenkel beziehungsweise des hinteren Ankerabschnitts in dem zylindrischen Ankerloch als der vorderen Spreizschenkel beziehungsweise des vorderen Ankerabschnitts.

Insbesondere sind die Spreizschenkel in der Längsrichtung des Dübels gewölbt, insbesondere konvex nach außen, derart, dass sie in ihren Längsmittelbereichen quer zur Längsrichtung des Dübels am weitesten quer zur Längsrichtung des Dübels nach außen stehen. Diese Wölbung weisen die Spreizschenkel in unverformtem, also weder in dem in dem Ankerloch zusammengedrückten noch in dem durch Einbringen des Spreizelements aufgespreiztem Zustand auf. Im verformten Zustand müssen die Spreizschenkel nicht konvex gewölbt sein. Die konvexe Wölbung betrifft eine Außenfläche beziehungsweise eine äußere Umfangsfläche der Spreizschenkel.

Vorzugsweise stützen sich die vorderen Spreizschenkel und/oder die hinteren Spreizschenkel an ihren Längsenden, die auch die Längsenden der Ankerabschnitte bilden, quer zur Längsrichtung aneinander ab. Das heißt, die Längsenden der Spreizschenkel stützen sich gegen das Zusammendrücken beim Einbringen in das Ankerloch aneinander ab, was aber das Zusammendrücken der Spreizschenkel auf den Durchmesser des Ankerlochs nicht verhindert, aber die radiale Andruckkraft der Spreizschenkel gegen die Lochwand des Ankerlochs und damit die Ankerkraft erhöht.

In der Längsrichtung des Dübels sind die vorderen und/oder die hinteren Spreizschenkel in dem Längsmittelbereich zwischen ihren vorderen und hinteren Längsenden vorzugsweise durchgängig voneinander getrennt, um das Aufspreizen, das heißt ein radiales Auseinanderdrücken der Spreizschenkel, nicht zu erschweren.

In bevorzugter Ausführung der Erfindung ist ein vorderer Spreizschenkel biegesteif mit einem hinteren Spreizschenkel verbunden derart, dass der vordere Spreizschenkel mit dem hinteren Spreizschenkel eine Art Wippe bildet: Wird der vordere Spreizschenkel quer zur Längsrichtung des Dübels nach innen gedrückt, beaufschlagt er den hinteren Spreizschenkel quer zur Längsrichtung des Dübels nach außen und umgekehrt. Auf diese Weise erhöhen die Spreizschenkel wechselweise ihre Andruckkraft radial nach außen, wenn sie in das Ankerloch eingebracht werden. "Biegesteif" bedeutet eine Steifigkeit derart, dass sich die beschriebene Wippenfunktion ergibt, bei der das Nachinnendrücken des vorderen Spreizschenkels den hinteren Spreizschenkel nach außen beaufschlagt und umgekehrt.

Insbesondere gehen jeweils ein vorderer und ein hinterer Spreizschenkel an einer Verbindungsstelle unter Ausbildung eines Verbinders einstückig ineinander über. Das heißt sie sind mittels des Verbinders biegesteif miteinander verbunden. Das ermöglich die Übertragung des Biegemoments zwischen zwei in Längsrichtung hintereinander angeordneten, sich entlang einer Achse in Längsrichtung erstreckenden und ineinander übergehenden Spreizschenkeln über den Verbinder, so dass die beiden Spreizschenkel statisch wie ein Durchlaufträger wirken. Insbesondere bildet der Verbinder eine Art Materialverdickung, so dass der Verbinder in der Verbindungsstelle eine höhere Biegesteifigkeit aufweist als die Spreizschenkel zwischen ihren Längsenden.

Ein hinteres Längsende des vorderen Spreizschenkels und ein vorderes Längsende des hinteren Spreizschenkels stützen sich bei einer bevorzugten Ausführung der Erfindung quer zur Längsrichtung des Dübels nach innen ab. Dadurch beaufschlagt ein Drücken des vorderen Spreizschenkels quer zur Längsrichtung des Dübels nach innen den hinteren Spreizschenkel quer zur Längsrichtung des Dübels nach außen und umgekehrt, insbesondere in der Art eines Durchlaufträgers, wodurch sich die Andruckkraft der Spreizschenkel radial nach außen wechselseitig erhöht.

Vorzugsweise sind die hinteren Längsenden der vorderen Spreizschenkel und/oder die vorderen Längsenden der hinteren Spreizschenkel derart miteinander verbunden, dass der Widerstand gegen ein Auseinanderdrücken quer zur Längsrichtung des Dübels an den hinteren Längsenden der vorderen Spreizschenkel und/oder an den vorderen Längsenden der hinteren Spreizschenkel erhöht ist.

Eine Verbindung der hinteren Längsenden der vorderen Spreizschenkel und/oder der vorderen Längsenden der hinteren Spreizschenkel quer zur Längsrichtung des Dübels bildet vorzugsweise auch ein Stützlager, das die hinteren Längsenden der vorderen Spreizschenkel und die vorderen Längsenden der hinteren Spreizschenkel quer zur Längsrichtung des Dübels nach innen abstützt, um die Wippfunktion der vorderen und hinteren Spreizschenkel zu gewährleisten.

Eine Ausgestaltung der Erfindung sieht vor, dass der vordere Ankerabschnitt genau zwei einander bezüglich der Längsachse des Dübels gegenüberliegende vordere Spreizschenkel und/oder der hintere Ankerabschnitt genau zwei einander bezüglich der Längsachse des Dübels gegenüberliegende hintere Spreizschenkel aufweist. Zum Aufspreizen des Dübels beziehungsweise der Ankerabschnitte beziehungsweise der Spreizschenkel ist ein Spreizelement in der Längsrichtung des Dübels zwischen die Spreizschenkel einbringbar. "Aufspreizen" bedeutet ein Auseinanderdrücken der Spreizschenkel quer zur Längsrichtung des Dübels. Das Spreizelement ist insbesondere stiftförmig und beispielsweise eine Schraube oder ein Nagel.

Eine Ausgestaltung des erfindungsgemäßen Dübels sieht einen sich in der Längsrichtung des Dübels erstreckenden Schaft, insbesondere einen Hohlschaft, insbesondere in Form eines zylindrischen Rohrs mit geschlossener Mantelfläche, an einem hinteren, dem vorderen Ankerabschnitt fernen Längsende des hinteren Ankerabschnitts vor. Der Dübel ist dadurch beispielsweise als Dämmstoffdübel, wobei der Schaft einen Dämmstoff auf dem Ankergrund durchsetzt, oder als Rahmendübel, wobei der Schaft einen Abstand vom Ankergrund zu einem Anbauteil oder dergleichen überbrückt, verwendbar. Der Schaft kann einstückiger Bestandteil des Dübels oder auch ein eigenes Bauteil sein.

Vorzugsweise weist der Dübel ein quer zur Längsrichtung über die Längsenden der Ankerabschnitte beziehungsweise der Spreizschenkel überstehendes axiales Widerlager an oder hinter dem hinteren Längsende des hinteren Ankerabschnitts auf. Das Widerlager begrenzt eine gemeinsame Einstecktiefe der beiden Ankerabschnitte in das Ankerloch.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels aufweisen, sind möglich.

Die Erfindung wird nachfolgend anhand eines in der Zeichnung dargestellten Ausführungsbeispiels näher erläutert. Es zeigen:

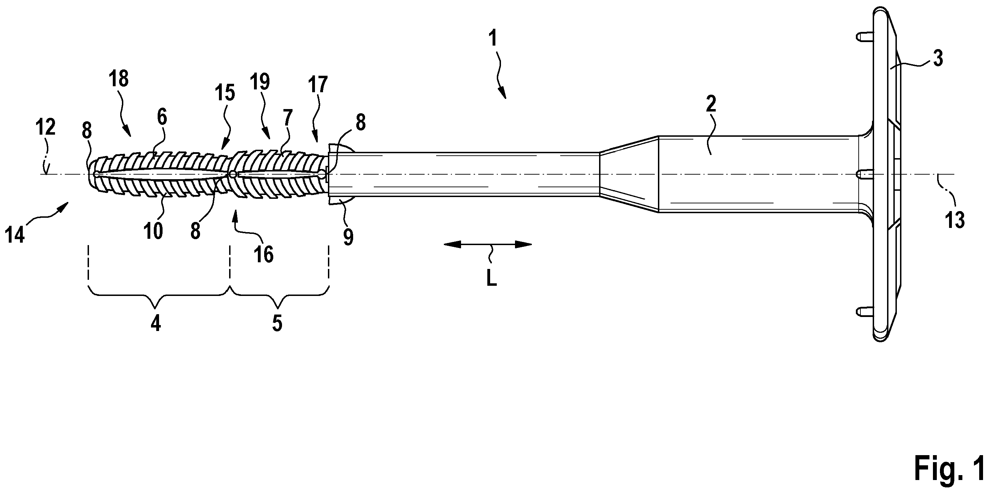

- Figur 1: eine Seitenansicht eines Dübels gemäß der Erfindung;
- Figur 2: eine Vergrößerung von Ankerabschnitten des Dübels aus Figur 1; und
- Figur 3: eine Stirnansicht des Dübels gemäß Pfeil III in Figur 2.

Der in der Zeichnung dargestellte, erfindungsgemäße Dübel 1 ist als Dämmstoffdübel ausgebildet und weist einen geraden, rohrförmigen Hohlschaft 2 mit einem Halteteller 3 an einem hinteren Ende und zwei in einer Längsrichtung L des Dübels 1 hintereinander angeordnete Ankerabschnitte 4, 5 an einem vorderen Ende des Hohlschafts 2 auf. Als "hinteres Ende" des Hohlschafts 2 wird hier das Ende bezeichnet, an dem der Halteteller 3 angeordnet ist. Das "vordere Ende" ist das Ende des Hohlschafts 2 an dem die Ankerabschnitte 4, 5 als Spreizbereich des Dübels 1 angeordnet sind.

Die beiden Ankerabschnitte 4, 5, der Hohlschaft 2 und der Halteteller 3 können einstückig miteinander oder zusammengesetzte Einzelteile sein. Vorzugsweise sind die beiden Ankerabschnitte 4, 5 beziehungsweise deren noch zu erläuternde Spreizschenkel 6, 7 einstückig miteinander. Insbesondere sind die Ankerabschnitte gemeinsam als Spritzgussteil aus Kunststoff hergestellt.

Der Halteteller 3 ist - im Ausführungsbeispiel - eine kreisförmige und Durchbrechungen 11 aufweisende Scheibe als großflächige Auflage zum Halten einer nicht dargestellten Dämmstoffplatte. Weder der Halteteller 3 noch der Hohlschaft 2 sind zwingende Bestandteile des Dübels 1, sondern können bei Ausführungen der Erfindung fehlen oder durch andere Elemente ersetzt sein.

Beide Ankerabschnitte 4, 5 weisen jeweils zwei einander bezüglich einer Axialebene 12 des Dübels 1 gegenüberliegenden Spreizschenkel 6, 7 auf, wobei hier die Spreizschenkel 6 des vorderen Ankerabschnitts 4 als vordere Spreizschenkel 6 und die Spreizschenkel 7 des hinteren Ankerabschnitts 5 als hintere Spreizschenkel 7 bezeichnet werden. Als vorderer Ankerabschnitt 4 wird hier der dem Hohlschaft 2 ferne Ankerabschnitt 4 und als hinterer Ankerabschnitt 5 der dem Hohlschaft 2 nahe und mit diesem verbundene Ankerabschnitt 5 bezeichnet. Die Anzahl von zwei vorderen Spreizschenkeln 6 und zwei hinteren Spreizschenkeln 7 ist bevorzugt, aber nicht zwingend für die Erfindung. Es sind auch Ausführungen des erfindungsgemäßen Dübels 1 insbesondere mit mehr als zwei vorderen Spreizschenkeln 6 und/oder mehr als zwei hinteren Spreizschenkeln 7 möglich.

In der Längsrichtung L des Dübels 1 sind die einander gegenüberliegenden vorderen Spreizschenkel 6 und ebenso die einander gegenüberliegenden hinteren Spreizschenkel 7 bogenförmig nach außen gewölbt derart, dass die vorderen und die hinteren Spreizschenkel 6, 7 in ihren Längsmitten 18, 19 weiter radial von der Axialebene 12 beziehungsweise von einer Längsachse 13 des Dübels 1 nach außen stehen als an ihren Längsenden 14, 15, 16, 17. Dabei sind hintere Längsenden 15 der vorderen Spreizschenkel 6 vorderen Längsenden 16 der hinteren Spreizschenkel 7 zugewandt, hintere Längsenden 17 der hinteren Spreizschenkel 7 dem Hohlschaft 2 zugewandt und vordere Längsenden 14 der vorderen Spreizschenkel 6 dem Hohlschaft 2 und den hinteren Spreizschenkeln 7 abgewandt. Die Längsenden 14, 15, 16, 17 der Spreizschenkel 6, 7 bilden auch die Längsenden 14, 15, 16, 17 der entsprechenden Ankerabschnitte 4, 5.

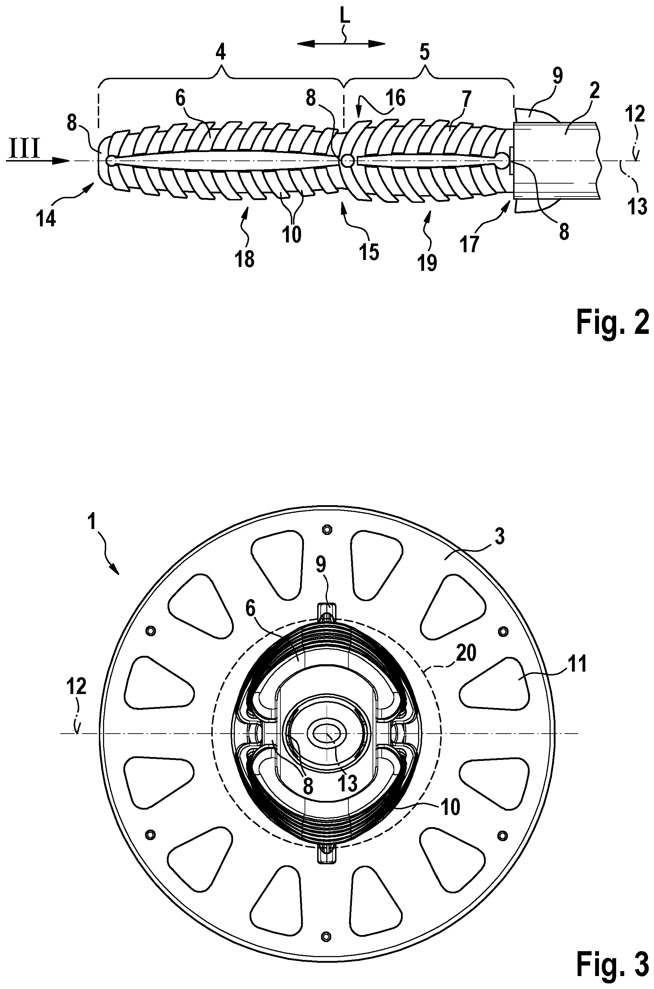

Durch die Wölbung ihrer Spreizschenkel 6, 7 in der Längsrichtung L des Dübels 1 nach außen weisen die Ankerabschnitte 4, 5 des Dübels 1 in unverformtem Zustand in ihren Längsmitten 18, 19 beziehungsweise in Längsmittelabschnitten zwischen den Längsenden 14, 15, 16, 17 einen größeren Durchmesser als an den Längsenden 14, 15, 16, 17 auf. Als Durchmesser der Ankerabschnitte 4, 5 wird hier ein Durchmesser eines Umkreises 20 (siehe Figur 3) aufgefasst, der beispielsweise an zwei gegenüberliegenden Umfangsstellen oder an drei, vier oder mehr gleichmäßig oder ungleichmäßig über den Umfang verteilten Umfangsstellen an den Spreizschenkeln 6, 7 anliegt und über den die Spreizschenkel 6, 7 nicht nach außen überstehen.

Die Spreizschenkel 6, 7 müssen keine kreisförmigen Umfangsflächen aufweisen und weisen im Ausführungsbeispiel ellipsenähnliche Umfangsflächen auf. Im Ausführungsbeispiel weisen die Spreizschenkel 6, 7 beziehungsweise die Ankerabschnitte 4, 5 in einer Spreizrichtung radial zur Längsachse 13 des Dübels 1 eine größere Abmessung als senkrecht zur Spreizrichtung auf.

Quer zur Längsrichtung L des Dübels 1, das heißt senkrecht zu der Axialebene 12 des Dübels 1, bezüglich der die Spreizschenkel 6, 7 einander gegenüber angeordnet sind beziehungsweise radial zur Längsachse 13 des Dübels 1, sind die Spreizschenkel 6, 7 elastisch, was eine Elastizität in einer anderen Richtung nicht ausschließt. Beim Einbringen der Ankerabschnitte 4, 5 in ein nicht dargestelltes, zylindrisches Ankerloch, dessen Durchmesser kleiner als die Durchmesser der Ankerabschnitte 4, 5, das heißt als die Durchmesser der Umkreise 20 der Ankerabschnitte 4, 5 ist, werden die Spreizschenkel 6, 7 elastisch zusammengedrückt auf den Durchmesser des Ankerlochs derart, dass sie mit einer Andruckkraft radial zur Längsachse 13 des Dübels 1 gegen eine Lochwand des Ankerlochs drücken. Und das, ohne dass ein Spreizelement zwischen die Spreizschenkel 6, 7 eingebracht ist. Erfindungsgemäß ist die radiale Andruckkraft der hinteren Spreizschenkel 7 gegen die Lochwand des Ankerlochs größer als die radiale Andruckkraft der vorderen Spreizschenkel 6 gegen die Lochwand des Ankerlochs mit dem gleichen Durchmesser wie bei den hinteren Spreizschenkeln 7. Es weist deswegen der hintere Ankerabschnitt 5 sowohl einen größeren Steckwiderstand beim Einbringen in das Ankerloch als auch eine größere Ankerkraft gegen Herausziehen aus dem Ankerloch auf als der vordere Ankerabschnitt. Dabei sind der Steckwiderstand und die Ankerkraft jedes Ankerabschnitts 4, 5 für sich gemeint.

Anders ausgedrückt ist eine Kraft zu einem radialen Zusammendrücken der Spreizschenkel 6, 7 auf ein bestimmtes Maß bei den hinteren Spreizschenkeln 7 größer als bei den vorderen Spreizschenkeln 6.

Erreicht werden die größere radiale Andruckkraft gegen die Lochwand des zylindrischen Ankerlochs und damit verbunden der größere Steckwiderstand und die größere Ankerkraft durch verschiedene Maßnahmen: Zum einen ist der hintere Ankerabschnitt 5 in der Längsrichtung des Dübels 1 kürzer als der vordere Ankerabschnitt 4, das heißt die hinteren, bogenförmig in der Längsrichtung L nach außen gewölbten Spreizschenkel 7 sind steifer gegen eine elastische Verformung um ein bestimmtes Maß radial nach innen als die vorderen Spreizschenkel 6.

Außerdem weist der hintere Ankerabschnitt 5 einen größeren Durchmesser auf als der vordere Ankerabschnitt 4, das heißt gegenüberliegende Umfangsstellen in der Spreizrichtung der hinteren Spreizschenkel 7 weisen einen größeren Abstand von der Axialebene 12 beziehungsweise von der Längsachse 13 des Dübels 1 auf als gegenüberliegende Umfangsstellen der vorderen Spreizschenkel 6. In der Längsrichtung L des Dübels 1 stehen die hinteren Spreizschenkel 7 in der Spreizrichtung radial über die vorderen Spreizschenkel 6 über.

Die angeführten Maßnahmen, damit die hinteren Spreizschenkel 7 eine größere radiale Andruckkraft gegen die Lochwand des zylindrischen Ankerlochs aufweisen, können einzeln oder in grundsätzlich beliebigen Kombinationen und Unterkombinationen verwirklicht sein. Ebenfalls schließt die Erfindung andere, nicht angeführte Maßnahmen zusätzlich oder ausschließlich statt der angeführten Maßnahmen nicht aus.

An ihren vorderen und hinteren Längsenden 14, 15, 16, 17 sind die vorderen Spreizschenkel 6 und die hinteren Spreizschenkel 7 miteinander verbunden derart, dass sie sich radial nach innen aneinander abstützen und beim Einführen in ein Ankerloch gegen ein Auseinanderbewegen gehalten sind. Die Verbinder 8 an den hinteren Längsenden 15 der vorderen Spreizschenkel 6 und den vorderen Längsenden 16 der hinteren Spreizschenkel 7 und die Verbinder 8 an den hinteren Längsenden 17 der hinteren Spreizschenkel 7 befinden sich in einem Umfangsbereich des Dübels 1, damit ein nicht dargestelltes, stiftförmiges Spreizelement wie beispielsweise eine Schraube oder ein Nagel zum Aufspreizen, das heißt zu einem Auseinanderdrücken der Spreizschenkel 6, 7 in Richtung der Längsachse 13 des Dübels 1 von hinten durch den Hohlschaft 2 zwischen die hinteren und die vorderen Spreizschenkel 7, 6, einbringbar ist.

Zwischen den Verbindern 8 sind die Spreizschenkel 6, 7 in der Längsrichtung des Dübels 1 durchgängig voneinander getrennt, um eine Bewegung der Spreizschenkel 6, 7 nicht zu behindern.

Über die Verbinder 8 an den hinteren Längsenden 15 der vorderen Spreizschenkel 6 und den vorderen Längsenden 16 der hinteren Spreizschenkel 7 hinweg gehen die vorderen Spreizschenkel 6 biegesteif in die hinteren Spreizschenkel 7 über. Ein vorderer Spreizschenkel 6 und ein in Längsrichtung L dahinter angeordneter Spreizschenkel 7 wirken somit statisch gemeinsam als eine Art Durchlaufträger, für den die Verbinder 8 Auflager bilden. Es geht also jeweils ein vorderer Spreizschenkel 6 biegesteif in einen hinteren Spreizschenkel 7 über, der sich auf der gleichen Seite der Axialebene 12 beziehungsweise der Längsachse 13 des Dübels 1 befindet. Aufgrund ihrer Elastizität gehen die vorderen Spreizschenkel 6 nicht starr in die hinteren Spreizschenkel 7 über, aber so steif, dass bei einem radialen Zusammendrücken der vorderen Spreizschenkel 6 die hinteren Spreizschenkel 7 auseinander beaufschlagt werden und umgekehrt. Dabei wirken die Verbinder 8 an den hinteren Längsenden 15 der vorderen Spreizschenkel 6 und den vorderen Längsenden 16 der hinteren Spreizschenkel 7 als Stützlager, über die sich die Spreizschenkel 6, 7 radial nach innen abstützen derart, dass ein vorderer und ein biegesteif in ihn übergehender hinterer Spreizschenkel 6, 7 eine Art Wippe bilden, die um die Verbinder 8, die das Stützlager bilden, schwenkbar ist. Die wechselseitige Beaufschlagung der Spreizschenkel 6, 7 radial nach außen, wenn der jeweils andere Spreizschenkel 6, 7 radial nach innen gedrückt wird, erhöht die Andruckkraft und die Ankerkraft des Dübels 1 in einem Ankerloch.

Durch die kleinere Steckkraft des vorderen Ankerabschnitts 4 in ein Ankerloch in einem massiven Ankergrund, beispielsweise einem Ankergrund aus Beton, lässt sich der vordere Ankerabschnitt 4 verhältnismäßig leicht in das Ankerloch einbringen. In dem massiven Ankergrund reicht eine Verankerung nur mit dem vorderen Ankerabschnitt 4 normalerweise aus. Der hintere Ankerabschnitt 5 wird vorzugsweise nur in ein Ankerloch in einem weniger festen Ankergrund oder in einen Hohlräume aufweisenden Ankergrund eingebracht. Die Ankerkraft kann durch Einbringen des nicht dargestellten, stiftförmigen Spreizelements zwischen die Spreizschenkel 6, 7 noch erhöht werden, da es die Spreizschenkel 6, 7 aufspreizt, das heißt radial auseinander drückt, und dadurch stärker gegen die Lochwand des Ankerlochs drückt.

An seinem vorderen Längsende, das heißt am oder kurz hinter dem hinteren Längsende 17 des hinteren Ankerabschnitts 5, weist der Hohlschaft 2 oder allgemein der Dübel 1 ein oder mehrere, in der Längsrichtung L des Dübels 1 radial über die vorderen und/oder die hinteren Längsenden 14, 15, 16, 17 der Ankerabschnitte 4, 5 überstehende axiale Widerlager 9 auf, die eine Einbringtiefe der beiden Ankerabschnitte 4, 5 in das Ankerloch in dem Ankergrund begrenzen. Im Ausführungsbeispiel weist der Dübel 1 zwei axiale Widerlager 9 einander gegenüber auf, die als radial abstehende Rippen ausgebildet sind.

Zur Erhöhung der Ankerkraft im Ankerloch weisen die Spreizschenkel 6, 7 außen Rippen 10 auf, die sich in der Umfangsrichtung erstrecken und die als Widerhaken in der Längsrichtung L des Dübels 1 schräg nach außen/hinten gerichtet sind.

### Bezugszeichenliste

- L: Längsrichtung
- 1: Dübel
- 2: Hohlschaft
- 3: Halteteller
- 4: vorderer Ankerabschnitt
- 5: hinterer Ankerabschnitt
- 6: vorderer Spreizschenkel
- 7: hinterer Spreizschenkel
- 8: Verbinder
- 9: axiales Widerlager
- 10: Rippe
- 11: Durchbrechung
- 12: Axialebene
- 13: Längsachse
- 14: vorderes Längsende des vorderen Spreizschenkels 6 beziehungsweise des vorderen Ankerabschnitts 4
- 15: hinteres Längsende des vorderen Spreizschenkels 6 beziehungsweise des vorderen Ankerabschnitts 4
- 16: vorderes Längsende des hinteren Spreizschenkels 7 beziehungsweise des hinteren Ankerabschnitts 5
- 17: hinteres Längsende des hinteren Spreizschenkels 7 beziehungsweise des vorderen Ankerabschnitts 5
- 18: Längsmitte des vorderen Spreizschenkels 6
- 19: Längsmitte des hinteren Spreizschenkels 7
- 20: Umkreis

## Patentansprüche

1. Dübel (1), mit einem vorderen, sich in einer Längsrichtung (L) des Dübels (1) erstreckenden, quer zur Längsrichtung (L) elastischen, vorderen Ankerabschnitt (4), dessen Durchmesser in einem unverspreizten Zustand von seinen Längsenden (14, 15) zu seiner Längsmitte (18) hin zunimmt, **dadurch gekennzeichnet, dass** der Dübel (1) einen, sich in der Längsrichtung (L) des Dübels (1) erstreckenden, quer zur Längsrichtung (L) elastischen hinteren Ankerabschnitt (5) aufweist, der mindestens zwei sich in Längsrichtung (L) über den hinteren Ankerabschnitt (5) erstreckende hintere Spreizschenkel (7) aufweist, die an ihren Längsenden miteinander verbunden sind und deren Länge in Längsrichtung (L) größer als ein Durchmesser des hinteren Ankerabschnitts (5) ist, und der sich in der Längsrichtung (L) des Dübels (1) hinter dem vorderen Ankerabschnitt (4) befindet, und dass in einem zylindrischen Ankerloch der hintere Ankerabschnitt (5) eine größere radiale Andruckkraft gegen eine Lochwand des Ankerlochs aufweist als der vordere Ankerabschnitt (4).

2. Dübel (1) nach Anspruch 1, **dadurch gekennzeichnet, dass** ein Durchmesser des hinteren Ankerabschnitts (5) in einem unverspreizten Zustand von seinen Längsenden (16, 17) zu seiner Längsmitte (19) zunimmt

3. Dübel (1) nach Anspruch 1 oder 2, **dadurch gekennzeichnet, dass** der hintere Ankerabschnitt (5) in der Längsrichtung (L) des Dübels (1) kürzer als der vordere Ankerabschnitt (4) ist.

4. Dübel (1) nach einem oder mehreren der Ansprüche 1 bis 3, **dadurch gekennzeichnet, dass** der hintere Ankerabschnitt (5) einen größeren Durchmesser als der vordere Ankerabschnitt (4) aufweist.

5. Dübel (1) nach Anspruch 1 oder 2, **dadurch gekennzeichnet, dass** der vordere Ankerabschnitt (4) mindestens zwei vordere, sich in der Längsrichtung (L) des Dübels (1) erstreckende, quer zur Längsrichtung (L) elastische Spreizschenkel (6) aufweist, dass die hinteren Spreizschenkel (7) quer zur Längsrichtung (L) elastisch sind, und dass die hinteren Spreizschenkel (7) eine größere Biegesteifigkeit quer zur Längsrichtung (L) des Dübels (1) aufweisen als die vorderen Spreizschenkel (6) und/oder dass die hinteren Spreizschenkel (7) quer zur Längsrichtung (L) des Dübels (1) über die vorderen Spreizschenkel (6) überstehen.

6. Dübel (1) nach Anspruch 5, **dadurch gekennzeichnet, dass** die Spreizschenkel (6, 7) in der Längsrichtung (L) des Dübels (1) gewölbt sind.

7. Dübel (1) nach Anspruch 5 oder 6, **dadurch gekennzeichnet, dass** sich die vorderen Spreizschenkel (6) an ihren Längsenden (14, 15) quer zur Längsrichtung (L) des Dübels (1) aneinander abstützen und/oder dass sich die hinteren Spreizschenkel (7) an ihren Längsenden (16, 17) quer zur Längsrichtung (L) des Dübels (1) aneinander abstützen.

8. Dübel (1) nach einem oder mehreren der Ansprüche 5 bis 7, **dadurch gekennzeichnet, dass** die vorderen Spreizschenkel (6) und/oder die hinteren Spreizschenkel (7) zwischen ihren Längsenden (14, 15, 16, 17) in der Längsrichtung (L) des Dübels (1) durchgängig voneinander getrennt sind.

9. Dübel (1) nach einem oder mehreren der Ansprüche 5 bis 8, **dadurch gekennzeichnet, dass** ein vorderer Spreizschenkel (6) biegesteif mit einem hinteren Spreizschenkel (7) verbunden ist.

10. Dübel (1) nach einem oder mehreren der Ansprüche 5 bis 9, **dadurch gekennzeichnet, dass** sich ein hinteres Längsende (15) des vorderen Spreizschenkels (6) und ein vorderes Längsende (16) des hinteren Spreizschenkels (7) stützlagerartig quer zur Längsrichtung (L) des Dübels (1) nach innen abstützen, derart, dass eine quer zur Längsrichtung (L) des Dübels (1) nach innen auf den vorderen Spreizschenkel (6) ausgeübte Kraft den hinteren Spreizschenkel (7) quer zur Längsrichtung (L) des Dübels (1) nach außen beaufschlagt und umgekehrt.

11. Dübel (1) nach einem oder mehreren der Ansprüche 5 bis 10, **dadurch gekennzeichnet, dass** bezogen auf eine Längsachse (13) des Dübels (1) einander gegenüberliegende Spreizschenkel (6, 7) an einem Übergang vom vorderen Ankerabschnitt (4) zum hinteren Ankerabschnitt (5) miteinander verbunden sind

12. Dübel (1) nach Anspruch 10 und 11, **dadurch gekennzeichnet, dass** die Verbindung der Längsenden (14, 15, 16, 17) der Spreizschenkel (6, 7) zugleich auch ein Stützlager bildet.

13. Dübel (1) nach einem oder mehreren der vorhergehenden Ansprüche, **dadurch gekennzeichnet, dass** der vordere Ankerabschnitt (4) zwei einander gegenüberliegende vordere Spreizschenkel (6) aufweist, zwischen die ein Spreizelement zum Aufspreizen der vorderen Spreizschenkel (6) einbringbar ist, und/oder dass der hintere Ankerabschnitt (5) zwei einander gegenüberliegende hintere Spreizschenkel (7) aufweist, zwischen die das Spreizelement zum Aufspreizen der hinteren Spreizschenkel (7) einbringbar ist.

14. Dübel (1) nach einem oder mehreren der vorhergehenden Ansprüche, **dadurch gekennzeichnet, dass** der Dübel (1) einen Schaft, insbesondere einen Hohlschaft (2) an dem in der Längsrichtung (L) des Dübels (1) dem vorderen Ankerabschnitt (4) fernen hinteren Längsende (17) des hinteren Ankerabschnitts (5) aufweist.

15. Dübel (1) nach einem oder mehreren der vorhergehenden Ansprüche, **dadurch gekennzeichnet, dass** der Dübel (1) ein quer zur Längsrichtung (L) des Dübels (1) über die vorderen und/oder die hinteren Längsenden (14, 15, 16, 17) der vorderen und/oder der hinteren Ankerabschnitte (4, 5) überstehendes axiales Widerlager (9) an oder hinter dem in der Längsrichtung (L) des Dübels (1) dem vorderen Ankerabschnitt (5) fernen hinteren Längsende (17) des hinteren Ankerabschnitts (5) aufweist.

## Claims

1. Anchor (1), comprising a front anchoring section (4), which extends in a longitudinal direction (L) of the anchor (1), is elastic transversely to the longitudinal direction (L), and the diameter of which, in an unexpanded state, increases from its longitudinal ends (14, 15) towards its longitudinal middle (18), **characterized in that** the anchor (1) has a rear anchoring section (5), which extends in the longitudinal direction (L) of the anchor (1), is elastic transversely to the longitudinal direction (L), and has at least two rear expansion legs (7) extending in the longitudinal direction (L) over the rear anchoring section (5), which are connected to one another at their longitudinal ends and the length of which in the longitudinal direction (L) is greater than a diameter of the rear anchoring section (5), and which is located in the longitudinal direction (L) of the anchor (1) behind the front anchoring section (4), and **in that**, in a cylindrical anchor hole, the rear anchoring section (5) has a greater radial contact pressure force against a hole wall of the anchor hole than the front anchoring section (4).

2. Anchor (1) according to claim 1, **characterized in that** a diameter of the rear anchoring section (5), in an unexpanded state, increases from its longitudinal ends (16, 17) towards its longitudinal middle (19).

3. Anchor (1) according to claim 1 or 2, **characterized in that** the rear anchoring section (5) is shorter in the longitudinal direction (L) of the anchor (1) than the front anchoring section (4).

4. Anchor (1) according to one or more of claims 1 to 3, **characterized in that** the rear anchoring section (5) has a greater diameter than the front anchoring section (4).

5. Anchor (1) according to claim 1 or 2, **characterized in that** the front anchoring section (4) has at least two front expansion legs (6), extending in the longitudinal direction (L) of the anchor (1) and elastic transversely to the longitudinal direction (L), that the rear expansion legs (7) are elastic transversely to the longitudinal direction (L), and that the rear expansion legs (7) have a greater flexural rigidity transversely to the longitudinal direction (L) of the anchor (1) than the front expansion legs (6) and/or that the rear expansion legs (7) project beyond the front expansion legs (6) transversely to the longitudinal direction (L) of the anchor (1).

6. Anchor (1) according to claim 5, **characterized in that** the expansion legs (6, 7) are curved in the longitudinal direction (L) of the anchor (1).

7. Anchor (1) according to claim 5 or 6, **characterized in that** the front expansion legs (6) support one another at their longitudinal ends (14, 15) transversely to the longitudinal direction (L) of the anchor (1) and/or that the rear expansion legs (7) support one another at their longitudinal ends (16, 17) transversely to the longitudinal direction (L) of the anchor (1).

8. Anchor (1) according to one or more of claims 5 to 7, **characterized in that** the front expansion legs (6) and/or the rear expansion legs (7) are continuously separated from one another between their longitudinal ends (14, 15, 16, 17) in the longitudinal direction (L) of the anchor (1).

9. Anchor (1) according to one or more of claims 5 to 8, **characterized in that** a front expansion leg (6) is connected in a flexurally rigid manner to a rear expansion leg (7).

10. Anchor (1) according to one or more of claims 5 to 9, **characterized in that** a rear longitudinal end (15) of the front expansion leg (6) and a front longitudinal end (16) of the rear expansion leg (7) support one another inwardly in the manner of a support bearing transversely to the longitudinal direction (L) of the anchor (1), such that a force exerted inwardly transversely to the longitudinal direction (L) of the anchor (1) on the front expansion leg (6) loads the rear expansion leg (7) outwardly transversely to the longitudinal direction (L) of the anchor (1), and vice versa.

11. Anchor (1) according to one or more of claims 5 to 10, **characterized in that** expansion legs (6, 7) which are opposite one another with respect to a longitudinal axis (13) of the anchor (1) are connected to one another at a transition from the front anchoring section (4) to the rear anchoring section (5).

12. Anchor (1) according to claims 10 and 11, **characterized in that** the connection of the longitudinal ends (14, 15, 16, 17) of the expansion legs (6, 7) simultaneously forms a support bearing.

13. Anchor (1) according to one or more of the preceding claims, **characterized in that** the front anchoring section (4) has two opposite front expansion legs (6), between which an expansion element can be inserted for expanding the front expansion legs (6), and/or that the rear anchoring section (5) has two opposite rear expansion legs (7), between which the expansion element can be inserted for expanding the rear expansion legs (7).

14. Anchor (1) according to one or more of the preceding claims, **characterized in that** the anchor (1) has a shank, in particular a hollow shank (2), at the rear longitudinal end (17) of the rear anchoring section (5), which is remote from the front anchoring section (4) in the longitudinal direction (L) of the anchor (1).

15. Anchor (1) according to one or more of the preceding claims, **characterized in that** the anchor (1) has an axial abutment (9), projecting transversely to the longitudinal direction (L) of the anchor (1) beyond the front and/or rear longitudinal ends (14, 15, 16, 17) of the front and/or rear anchoring sections (4, 5), at or behind the rear longitudinal end (17) of the rear anchoring section (5), which is remote from the front anchoring section (4) in the longitudinal direction (L) of the anchor (1).

## Revendications

1. Cheville (1), comportant une section d'ancrage avant (4), s'étendant dans une direction longitudinale (L) de la cheville (1), élastique transversalement à la direction longitudinale (L), et dont le diamètre, dans un état non expansé, augmente de ses extrémités longitudinales (14, 15) vers son milieu longitudinal (18), **caractérisée en ce que** la cheville (1) comporte une section d'ancrage arrière (5), s'étendant dans la direction longitudinale (L) de la cheville (1), élastique transversalement à la direction longitudinale (L), qui comporte au moins deux branches d'expansion arrière (7) s'étendant dans la direction longitudinale (L) sur la section d'ancrage arrière (5), qui sont reliées entre elles à leurs extrémités longitudinales et dont la longueur dans la direction longitudinale (L) est supérieure à un diamètre de la section d'ancrage arrière (5), et qui est située, dans la direction longitudinale (L) de la cheville (1), derrière la section d'ancrage avant (4), et **en ce que**, dans un trou d'ancrage cylindrique, la section d'ancrage arrière (5) présente, contre une paroi du trou d'ancrage, une force d'appui radiale plus grande que celle de la section d'ancrage avant (4).

2. Cheville (1) selon la revendication 1, **caractérisée en ce qu'**un diamètre de la section d'ancrage arrière (5), dans un état non expansé, augmente de ses extrémités longitudinales (16, 17) vers son milieu longitudinal (19).

3. Cheville (1) selon la revendication 1 ou 2, **caractérisée en ce que** la section d'ancrage arrière (5) est plus courte, dans la direction longitudinale (L) de la cheville (1), que la section d'ancrage avant (4).

4. Cheville (1) selon une ou plusieurs des revendications 1 à 3, **caractérisée en ce que** la section d'ancrage arrière (5) présente un diamètre plus grand que la section d'ancrage avant (4).

5. Cheville (1) selon la revendication 1 ou 2, **caractérisée en ce que** la section d'ancrage avant (4) comporte au moins deux branches d'expansion avant (6), s'étendant dans la direction longitudinale (L) de la cheville (1) et élastiques transversalement à la direction longitudinale (L), **en ce que** les branches d'expansion arrière (7) sont élastiques transversalement à la direction longitudinale (L), et **en ce que** les branches d'expansion arrière (7) présentent une rigidité en flexion, transversalement à la direction longitudinale (L) de la cheville (1), plus grande que les branches d'expansion avant (6) et/ou **en ce que** les branches d'expansion arrière (7) font saillie au-delà des branches d'expansion avant (6) transversalement à la direction longitudinale (L) de la cheville (1).

6. Cheville (1) selon la revendication 5, **caractérisée en ce que** les branches d'expansion (6, 7) sont cintrées dans la direction longitudinale (L) de la cheville (1).

7. Cheville (1) selon la revendication 5 ou 6, **caractérisée en ce que** les branches d'expansion avant (6) se soutiennent mutuellement à leurs extrémités longitudinales (14, 15) transversalement à la direction longitudinale (L) de la cheville (1) et/ou **en ce que** les branches d'expansion arrière (7) se soutiennent mutuellement à leurs extrémités longitudinales (16, 17) transversalement à la direction longitudinale (L) de la cheville (1).

8. Cheville (1) selon une ou plusieurs des revendications 5 à 7, **caractérisée en ce que** les branches d'expansion avant (6) et/ou les branches d'expansion arrière (7) sont séparées l'une de l'autre de manière continue entre leurs extrémités longitudinales (14, 15, 16, 17) dans la direction longitudinale (L) de la cheville (1).

9. Cheville (1) selon une ou plusieurs des revendications 5 à 8, **caractérisée en ce qu'**une branche d'expansion avant (6) est reliée de manière rigide en flexion à une branche d'expansion arrière (7).

10. Cheville (1) selon une ou plusieurs des revendications 5 à 9, **caractérisée en ce qu'**une extrémité longitudinale arrière (15) de la branche d'expansion avant (6) et une extrémité longitudinale avant (16) de la branche d'expansion arrière (7) se soutiennent vers l'intérieur à la manière d'un appui transversalement à la direction longitudinale (L) de la cheville (1), de sorte qu'une force exercée vers l'intérieur transversalement à la direction longitudinale (L) de la cheville (1) sur la branche d'expansion avant (6) sollicite la branche d'expansion arrière (7) vers l'extérieur transversalement à la direction longitudinale (L) de la cheville (1), et inversement.

11. Cheville (1) selon une ou plusieurs des revendications 5 à 10, **caractérisée en ce que** des branches d'expansion (6, 7) opposées l'une à l'autre par rapport à un axe longitudinal (13) de la cheville (1) sont reliées entre elles au niveau d'une transition de la section d'ancrage avant (4) vers la section d'ancrage arrière (5).

12. Cheville (1) selon les revendications 10 et 11, **caractérisée en ce que** la liaison des extrémités longitudinales (14, 15, 16, 17) des branches d'expansion (6, 7) forme simultanément un appui.

13. Cheville (1) selon une ou plusieurs des revendications précédentes, **caractérisée en ce que** la section d'ancrage avant (4) comporte deux branches d'expansion avant (6) opposées l'une à l'autre, entre lesquelles un organe d'expansion peut être introduit pour écarter les branches d'expansion avant (6), et/ou **en ce que** la section d'ancrage arrière (5) comporte deux branches d'expansion arrière (7) opposées l'une à l'autre, entre lesquelles l'organe d'expansion peut être introduit pour écarter les branches d'expansion arrière (7).

14. Cheville (1) selon une ou plusieurs des revendications précédentes, **caractérisée en ce que** la cheville (1) comporte une tige, notamment une tige creuse (2), au niveau de l'extrémité longitudinale arrière (17) de la section d'ancrage arrière (5), éloignée de la section d'ancrage avant (4) dans la direction longitudinale (L) de la cheville (1).

15. Cheville (1) selon une ou plusieurs des revendications précédentes, **caractérisée en ce que** la cheville (1) comporte une butée axiale (9), faisant saillie transversalement à la direction longitudinale (L) de la cheville (1) au-delà des extrémités longitudinales avant et/ou arrière (14, 15, 16, 17) des sections d'ancrage avant et/ou arrière (4, 5), à ou derrière l'extrémité longitudinale arrière (17) de la section d'ancrage arrière (5), éloignée de la section d'ancrage avant (4) dans la direction longitudinale (L) de la cheville (1).
